# EUROPÄISCHE PATENTSCHRIFT

(11) **EP 1 593 900 B1**
(45) Veröffentlichungstag und Bekanntmachung des Hinweises auf die Patenterteilung: **05.11.2008**
(21) Anmeldenummer: 04010938.1
(22) Anmeldetag: 07.05.2004
(51) Int. Cl.: F16L 23/04, F16D 1/00

(54) **Klemme für Flanschverbindungen**
Clamp for a flanged connection
Collier de raccord de brides

(43) Veröffentlichungstag der Anmeldung: 09.11.2005
(73) Patentinhaber: Hans Oetiker AG Maschinen- und Apparatefabrik, 8812 Horgen (CH)
(72) Erfinder: Meier, Ulrich, 8820 Wädenswil (CH); Manchen, Rolf Martin, 78073 Bad Dürrheim (DE)
(74) Vertreter: Strehl Schübel-Hopf & Partner

(56) Entgegenhaltungen:
- DE-A- 19 650 675
- US-A- 2 709 094
- US-B1- 6 247 206

## Beschreibung

Im Kraftfahrzeugbau erfolgt die Verbindung zwischen einer getriebeseitigen Welle und einer zum Rad führenden Gelenkwelle beispielsweise dadurch, daß die zu verbindenden Wellen an ihren Enden jeweils mit einem Flansch versehen sind und die beiden Flansche über eine Anzahl von Bolzen miteinander verschraubt werden. Diese Verbindungsart ist aufwendig und führt wegen des zur Handhabung der Bolzen erforderlichen Platzes zu Einschränkungen in der Konstruktionsfreiheit. Ähnliche Probleme bestehen bei anderen Flanschverbindungen, im Kraftfahrzeugbau etwa auch beim Anschluß von Auspuffanlagen.

Aus DE 196 50 675 A1 ist eine offene ringförmige Klemme gemäß dem ersten Teil des Anspruchs 1 bekannt. Zum Schließen ist ein Ende dieser Klemme mit einem Bügel versehen, der in einen am anderen Ende vorhandenen Haken eingehängt wird.

US 6,247,206 B1 offenbart eine offene Schlauchklemme mit einer Spanneinrichtung gemäß der ersten kennzeichnen Merkmal des Anspruchs 1.

Der Erfindung liegt die generelle Aufgabe zu Grunde, Nachteile wie sie bei vergleichbaren Anordnungen nach dem Stand der Technik anzutreffen sind, mindestens teilweise zu beseitigen. Eine speziellere Aufgabe kann darin gesehen werden, eine einfachere und Platz sparende Flanschverbindung zu ermöglichen, insbesondere auch für Wellen mit Drehmomentübertragung.

Die erfindungsgemäße Lösung dieser Aufgabe ist in Anspruch 1 angegeben.

Die ringförmige Klemme nach Anspruch 1 weist dazu eine Spanneinrichtung in Gestalt des sogenannten "Oetiker-Ohrs" auf und ist im Profil im Wesentlichen U-förmig mit seitlichen Schenkeln zum Umgreifen der Flansche der zu verbindenden Bauteile gestaltet. Eine derartige Klemme erhöht den axialen Platzbedarf kaum gegenüber dem, den die Flansche selbst einnehmen. Ferner läßt sich die Klemme mit einem nur in Radialrichtung angreifenden Werkzeug einfach und schnell spannen, um eine feste Verbindung zwischen den beiden Bauteilen herzustellen. Der im äußeren Bandende vorhandene, nach innen weisende Haken gelangt beim Spannen der Klemme in Berührung mit den umgriffenen Flanschen und wird dadurch in festen Eingriff mit dem zugehörigen Durchbruch gedrückt.

Die Weiterbildung der Erfindung nach Anspruch 2 ist insofern vorteilhaft, als beim Spannen der Klemme deren Schenkel die miteinander zu verbindenden Bauteile gegeneinander zu ziehen suchen. Diese Gestaltung ist dann besonders wirksam, wenn die Flansche der Bauteile gemäß Anspruch 11 entsprechend den Schenkeln der Klemme konisch ausgebildet sind.

Das in Anspruch 3 angegebene Merkmal erhöht die Steifigkeit der Klemmenschenkel und damit die von der Klemme übertragbare Axialkraft.

Die Weiterbildung nach Anspruch 5 ist zur Erzielung einer sicheren Verbindung der beiden Bandteile von Vorteil.

In der Gestaltung nach Anspruch 7 läßt sich die zunächst ungeschlossene Klemme leicht auseinander klappen.

Die im Anspruch 8 angegebene Maßnahme ist zweckmäßig, weil sich dadurch Falten in den Flanschen im Zuge der Kaltverformung der ringförmigen, im Profil U-förmigen Klemme vermeiden lassen.

Das in Anspruch 9 angegebene Merkmal dient einer Versteifung des Ohrs und erhöht insgesamt die Haltekraft der Klemme.

Ein Ausführungsbeispiel der Erfindung wird nachstehend anhand der Zeichnung näher erläutert. Darin zeigen
Fig. 1 ein Beispiel für zwei miteinander zu verbindende Wellen,
Fig. 2 die gleichen Teile wie Fig. 1 im verbundenen Zustand,
Fig. 3 die in der Verbindung nach Fig. 2 verwendete Klemme im nicht gespannten Zustand,
Fig. 4 eine Seitenansicht der Klemme nach Fig. 3,
Fig. 5 das Profil der Klemme nach Fig. 3 und 4,
Fig. 6 eine der Fig. 3 ähnliche Darstellung der Klemme im gespannten Zustand,
Fig. 7 den Brechzuschnitt für die Klemme, wobei zur Verdeutlichung bereits das Ohr und die Haken eingezeichnet sind, und
Fig. 8 eine Längsschnitt durch die Klemme nach Fig. 7.

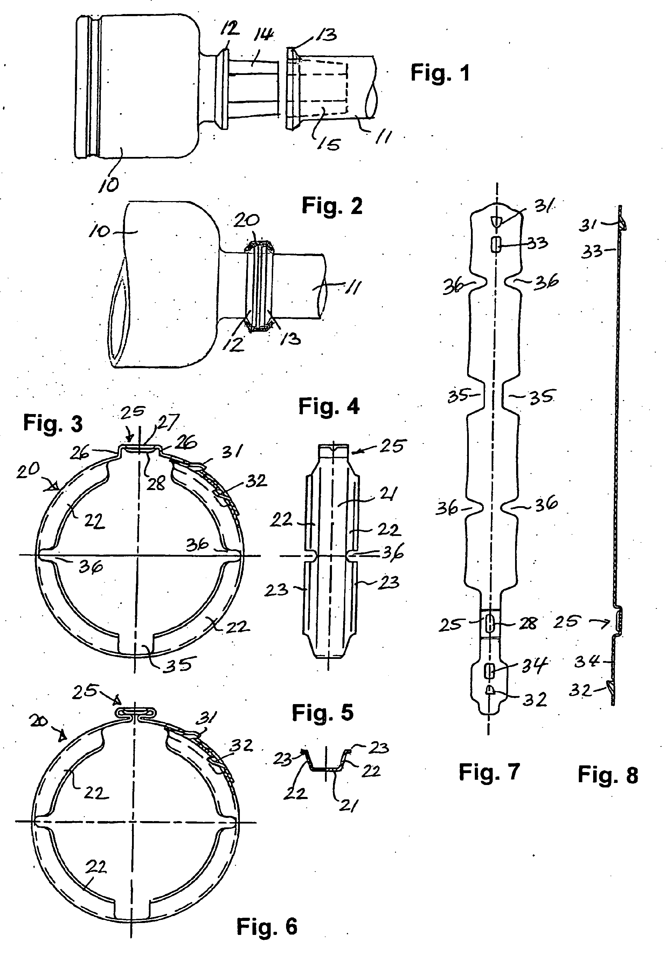

In Fig. 1 ist links ein Teil einer getriebeseitigen Welle 10 und rechts ein Teil einer zu einem Rad eines Kraftfahrzeugs führenden Gelenkwelle 11 dargestellt. Die Welle 10 ist mit einem Flansch 12, die Welle 11 mit einem Flansch 13 versehen. Die Welle 10 weist einen über den Flansch 12 hinausragenden pyramidenstumpfförmigen Wellenansatz 14 auf, der in eine komplementär geformte Vertiefung 15 in der Welle 11 eingreift. Die von einander abgewandten Flächen der beiden Flansche 12, 13 sind derart konisch gestaltet, daß sich die Flansche radial nach außen verjüngen.

Gemäß Fig. 2 ist der Wellenansatz 14 der Welle 10 so weit in die Vertiefung **15** der Welle **11** eingeführt, daß ihre komplementären Pyramidenstumpfflächen gegeneinander liegen. Zwischen den einander zugewandten Flächen der beiden Flansche 12 und 13 besteht in diesem Zustand nur ein geringer Abstand. Die Verbindung der beiden Flansche 12, 13 erfolgt durch eine die Flansche 12, 13 umgreifende ringförmige Klemme 20, die im einzelnen anhand von Fig. 3 bis 8 erläutert wird.

Die in Fig. 3 bis 6 gezeigte Klemme 20 ist aus einem in Fig. 7 und 8 gezeigten Blechstreifen hergestellt, der einen in Umfangsrichtung verlaufenden mittleren Bereich 21 aufweist, an dessen beiden Seiten Schenkel 22 angeformt sind. Die Innenkanten der beiden Schenkel 22 sind in Axialrichtung voneinander weg gebogen, so daß sich schmale zylindrische seitliche Bandbereiche 23 ergeben; siehe Fig. 4 und 5.

In dem in Fig. 3 oberen Bereich sind die Schenkel 22 unterbrochen. In diesem Bereich ist eine Spanneinrichtung in Form eines sogenannten "Oetiker-Ohrs" 25 ausgebildet. Das Ohr 25 weist zwei radial nach außen ragende Stegteile 26 auf, deren äußere Enden durch einen Brückenabschnitt 27 verbunden sind. Der Brückenabschnitt 27 ist durch eine eingeprägte Sicke 28 versteift.

In Fig. 3 ist die Klemme 20 im nicht-gespannten Zustand gezeigt, in dem das Ohr 25 seine bei der Fertigung der Klemme vorgegebene Form hat. Fig. 6 zeigt die gleiche Klemme 20 im gespannten Zustand, in dem das Ohr 25 mittels eines (nicht gezeigten) zangenartigen Werkzeugs dadurch verformt worden ist, daß die Fußenden der Stegteile 26 aufeinander zu bewegt worden sind. Das Ohr 25 wird dabei im wesentlichen plastisch verformt, wobei die Ohrform eine gewisse Elastizität vermittelt.

Wie aus Fig. 7 und 8 ersichtlich, ist die Klemme 20 aus einer Länge eines Metallbandes 30 gefertigt und stellt somit eine offene Klemme dar. Das Band 30 ist nahe seinen beiden Enden jeweils mit einem aus dem Bandmaterial teilweise ausgestanzten und herausgedrückten Haken 31, 32 sowie, einwärts von dem Haken gelegen, mit einem Durchbruch 33, 34 versehen.

In Fig. 3 und 6 ist die Klemme **20** im geschlossenen Zustand dargestellt, wobei der am inneren Bandende ausgebildete, nach außen weisende Haken **31** den nahe dem äußeren Bandende vorhandenen Durchbruch **34** nach außen durchsetzt, während der am äußeren Bandende vorgesehene Haken **32** den nahe dem inneren Bandende vorhandenen Durchbruch 33 in Radialrichtung nach innen durchsetzt.

Beim Spannen der Klemme durch Zusammenziehen des Ohrs **25** werden die Haken **31, 32** fest in Eingriff mit den Durchbrüchen **34, 33** gezogen, wobei der nach innen ragende Haken **32** in Berührung mit den Wellenflanschen **12, 13** gelangt und dadurch in noch festeren Eingriff mit dem Durchbruch **33** gedrückt wird.

Um die Klemme **20** nach dem Verbinden der beiden Wellen **10, 11** anlegen zu können, wird sie geöffnet, wobei die Schenkel **22** der Klemme **20** in einem dem Ohr **25** gegenüberliegenden Bereich **35** unterbrochen sind, so daß sich die Klemme **20** in diesem Bereich klappen läßt.

Zwischen dem Ohr **25** und dem in diesem Ausführungsbeispiel diametral gegenüberliegenden Bereich **35** sind die Schenkel **22** mit Ausschnitten **36, 37** versehen. Die Ausschnitte **36, 37** dienen dazu, bei der Kaltverformung der ringförmigen Klemme **22** Falten in den Schenkeln **22** zu vermeiden.

### Bezugszeichenliste

- **10**: getriebeseitige Welle
- **11**: Gelenkwelle
- **12**: Flansch an **10**
- **13**: Flansch an **11**
- **14**: Wellenansatz an **10**
- **15**: Vertiefung in **11**
- **20**: Klemme
- **21**: mittlerer Bandbereich
- **22**: Schenkel
- **23**: seitliche Bandbereiche
- **25**: Ohr
- **26**: Stegteile
- **27**: Brückenabschnitt
- **28**: Sicke in **25**
- **30**: Metallband
- **31**: auswärts gerichteter Haken
- **32**: einwärts gerichteter Haken
- **33**: Durchbruch für **13**
- **34**: Durchbruch für **32**
- **35**: Unterbrechung
- **36**: Ausschnitte

## Patentansprüche

1. Offene ringförmige Klemme (**20**), die aus einem Band hergestellt und im Profil im wesentlichen U-förmig mit seitlichen Schenkeln (**22**) zum Umgreifen von Flanschen zweier zu verbindender Bauteile ausgebildet ist, wobei die Bandenden durch Haken (**31, 32**) und Durchbrüche (**33, 34**) miteinander koppelbar sind, mit einer Spanneinrichtung in Gestalt eines Ohrs (**25**) mit zwei radial nach außen weisenden Stegteilen (**26**) und einem deren äußere Enden verbindenden Brückenabschnitt (**27**) vorgesehen ist, wobei das Ohr (**25**) zum Spannen der Klemme (**20**) durch gegenseitige Annäherung der Fußenden der Stegteile (**26**) plastisch verformbar ist,
**dadurch gekennzeichnet, daß** jedes der beiden einander überlappenden Bandenden der Klemme (**20**) einen in einen Durchbruch (**33, 34**) im jeweils anderen Bandende eingreifenden Haken (**31, 32**) aufweist.

2. Klemme (**20**) nach Anspruch 1, wobei die Schenkel (**22**) unter einem Winkel so zueinander geneigt sind, daß sich das U-Profil zur Achse hin erweitert.

3. Klemme (**20**) nach Anspruch 1 oder 2, wobei die Innenkanten der Schenkel (**22**) in Achsrichtung voneinander weg gebogen sind.

4. Klemme (**20**) nach einem der vorhergehenden Ansprüche, wobei die Schenkel (**22**) in Umfangsrichtung im Bereich des Ohrs (**25**) unterbrochen sind.

5. Klemme (**20**) nach einem der vorhergehenden Ansprüche, wobei die beiden Haken (**31, 32**) gegeneinander gerichtet sind.

6. Klemme (**20**) nach einem der vorhergehenden Ansprüche, wobei der von den Bandenden gebildete Verbindungsbereich dem von dem Ohr (**25**) gebildeten Spannbereich benachbart angeordnet ist.

7. Klemme (**20**) nach einem der vorhergehenden Ansprüche, wobei die Schenkel (**22**) in einem dem Ohr (**25**) gegenüberliegenden Bereich (**35**) unterbrochen sind.

8. Klemme (**20**) nach Anspruch 7, wobei die Schenkel (**22**) in Umfangsrichtung an Stellen zwischen dem Ohr (**25**) und dem ihm gegenüberliegenden Bereich (**35**) ausgeschnitten (**36**) sind.

9. Klemme (**20**) nach der vorhergehenden Ansprüche, wobei der Brückenabschnitt (**27**) des Ohrs (**25**) eine Verstärkungssicke (**28**) aufweist.

10. Verwendung der Klemme (**20**) nach einem der vorhergehenden Ansprüche in einer Anordnung zur drehmoment-übertragenden Verbindung zweier stirnseitig jeweils mit einem Flansch (**12, 13**) versehener Wellen (**10, 11**), wobei eine der Wellen (**10**) mit einem unrunden Wellenfortsatz (**14**) in eine komplementär geformte stirnseitige Vertiefung (**15**) der anderen Welle (**11**) eingreift.

11. Verwendung nach Anspruch 10, wobei die voneinander abgewandten Flächen der beiden Flansche (**12, 13**) derart konisch gestaltet sind, daß die Flanschdicke radial nach außen abnimmt, und die Schenkel (**22**) der Klemme (**20**) unter einem zur Konusform der Flansche (**12, 13**) komplementären Winkel zueinander verlaufen.

## Claims

1. An open annular clamp (**20**) which is manufactured from a band and is formed with a substantially U-shaped profile having lateral legs (**22**) for engaging flanges of two parts to be interconnected, wherein the two ends of the band are adapted to be coupled together by means of hooks (**31, 32**) and windows (**33, 34**), comprising tightening means in the form of an ear (**25)** which has two radially outward extending leg portions (**26**) and a bridge portion (**27**) interconnecting the outer ends of the leg portions, wherein the ear (**25**) is plastically deformable for tightening the clamp (**20**) by bringing the inner ends of the leg portions (**26**) closer to each other,
**characterised in that** either one of the two overlapping band ends of the clamp (**20**) has a hook (**31, 32**) engaging a window (**33, 34**) provided in the respective other band end.

2. The clamp (**20**) of claim 1, wherein the legs (**22**) are inclined toward each other at such an angle that the width of the U-profile increases toward the axis.

3. The clamp (**20**) of claim 1 or 2, wherein the inner edges of the legs (**22**) are bent away from each other in the axial direction.

4. The clamp (**20**) of any preceding claim, wherein the legs (**22**) are interrupted in the circumferential direction within the region of the ear (**25**).

5. The clamp (**20**) of any preceding claim, wherein the two hooks (**31, 32**) are directed against each other.

6. The clamp (**20**) of any preceding claim, wherein the connection region constituted by the band ends is disposed near the tightening region constituted by the ear (**25**).

7. The clamp (**20**) of any preceding claim, wherein the legs (**22**) are interrupted in a region (**35**) disposed opposite the ear (**25**).

8. The clamp (**20**) of claim 7, wherein the legs (**22**) are cut out (**36**) at circumferential locations situated between the ear (**25**) and the region (**35**) opposite the ear.

9. The clamp (**20**) of any preceding claim, wherein the bridge portion (**27**) of the ear (**25**) has a reinforcing bead (**28**).

10. Use of the clamp (**20**) of any preceding claim in an arrangement for connecting two shafts (**10, 11**), the ends of which are each provided with a flange (**12, 13**), in a torque-transmitting manner, wherein one of the shafts (**10**) has a non-circular shaft extension (**14**) which engages a complementarily shaped end-side recess (**15**) of the other shaft (**11**).

11. The use of claim 10 wherein the surfaces of the two flanges (**12, 13**) which face away from each other are shaped conically such that the flange thickness decreases radially outward, and the legs (**22**) of the clamp (**20**) enclose an angle which is complementary to the conical shape of the flanges (**12, 13**).

## Revendications

1. Collier de serrage (20) annulaire ouvert qui est réalisé dans une bande et présente un profil sensiblement en U avec des branches latérales (22) pour entourer des brides de deux composants à assembler, les extrémités de la bande pouvant être couplées entre elles par des crochets (31, 32) et des ajours (33, 34), un dispositif de serrage étant prévu sous la forme d'une oreille (25) avec deux pattes (26) dirigées radialement vers l'extérieur et un segment formant pont (27) reliant leurs extrémités extérieures, l'oreille (25) étant déformable plastiquement pour serrer le collier de serrage (20) par rapprochement réciproque des extrémités de pied des pattes (26),
**caractérisé en ce que** chacune des deux extrémités de bande, se recouvrant l'une l'autre, du collier de serrage (20), présente un crochet (31, 32) s'engageant dans un ajour (33, 34) de l'autre extrémité de bande.

2. Collier de serrage (20) selon la revendication 1, dans lequel les branches (22) sont inclinées l'une par rapport à l'autre suivant un angle, de manière que le profil en U s'élargisse vers l'axe.

3. Collier de serrage (20) selon l'une quelconque des revendications 1 ou 2, dans lequel les bords intérieurs des branches (22) sont arqués en s'écartant l'un de l'autre dans la direction axiale.

4. Collier de serrage (20) selon l'une quelconque des revendications 1 à 3, dans lequel les branches (22) sont interrompues dans la direction périphérique, dans la zone de l'oreille (25).

5. Collier de serrage (20) selon l'une quelconque des revendications précédentes, dans lequel les deux crochets (31, 32) sont dirigés en sens contraires.

6. Collier de serrage (20) selon l'une quelconque des revendications 1 à 5, dans lequel la zone de liaison, formée par les extrémités de bande, est disposée au voisinage de la zone de serrage formée par l'oreille (25).

7. Collier de serrage (20) selon l'une quelconque des revendications 1 à 6, dans lequel les branches (22) sont interrompues dans une zone (35) située face à l'oreille (25).

8. Collier de serrage (20) selon la revendication 7, dans lequel les branches (22) sont découpées (36) dans la direction périphérique en des endroits situés entre l'oreille (25) et la zone (35) qui lui fait face.

9. Collier de serrage (20) selon l'une quelconque des revendications 1 à 8, dans lequel le segment formant pont (27) de l'oreille (25) présente une moulure de renfort (28).

10. Utilisation du collier de serrage (20) selon l'une quelconque des revendications 1 à 9 dans un agencement pour la liaison transmettant un couple de rotation de deux arbres (10, 11) pourvus frontalement chacun d'une bride (12, 13), l'un des arbres (10) s'engageant, par un prolongement d'arbre (14) non circulaire, dans un creux (15) frontal, de forme complémentaire, de l'autre arbre (11).

11. Utilisation selon la revendication 10, dans laquelle les surfaces tournées à l'opposé l'une de l'autre des deux brides (12, 13) sont de forme conique telle que l'épaisseur de bride diminue radialement vers l'extérieur, et les branches (22) du collier de serrage (20) s'étendent l'une par rapport à l'autre suivant un angle complémentaire de la forme conique des brides (12, 13).
